Europäisches Patentamt

(19) European Patent Office

Office européen des brevets

(11) Veröffentlichungsnummer: **0 054 140**
A1

(12) **EUROPÄISCHE PATENTANMELDUNG**

(21) Anmeldenummer: 81108699.0

(22) Anmeldetag: 22.10.81

(51) Int. Cl.³: **C 08 G 65/44**
C 08 G 65/48, C 08 F 283/08
C 08 F 4/36

(30) Priorität: 16.12.80 DE 3047366

(43) Veröffentlichungstag der Anmeldung:
23.06.82 Patentblatt 82/25

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Naarmann, Herbert, Dr.
Haardtblick 15
D-6719 Wattenheim(DE)

(72) Erfinder: Brandstetter, Franz, Dr.
Ritterbuechel 45
D-6730 Neustadt(DE)

(54) Verfahren zur Herstellung von Polyphenylenäthern.

(57) Verfahren zur Herstellung hochmolekularer Polyphenylenäther aus einwertigen Phenolen, die in den beiden ortho-Stellungen, nicht aber in der para-Stellung, Alkylsubstituenten aufweisen, durch oxidative Kupplungsreaktion mit Sauerstoff bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, wobei mindestens 3 Gewichtsprozent eines alkylsubstituierten Phenols verwendet wird, das in 2- oder 6-Stellung eine propf- bzw. oxidationsfähige Isopropylgruppe trägt.

Als alkylsubstituiertes Phenol ist 2-Isopropyl-6-methylphenol besonders geeignet. Nach bevorzugter Verfahrensweise wird auf den Isopropylgruppen enthaltenden Polyphenylenäther ein äthylenisch ungesättigtes Monomer, wie Styrol oder Methylmethacrylat, propfpolymerisiert.

Die Isopropylgruppe des Polyphenylenäthers kann durch Oxidation in eine Hydroperoxidgruppe überführt und das erhaltene Polymer für radikalische Polymerisationen verwendet werden.

## Verfahren zur Herstellung von Polyphenylenäthern

Die Erfindung betrifft ein Verfahren zur Herstellung hochmolekularer Polyphenlenäthern aus einwertigen Phenolen, die in den beiden ortho-Stellungen, nicht aber in der para-Stellung Alkylsubstiuenten aufweisen durch oxidative Kupplungsreaktion mit Sauerstoff bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und einem geradkettigen aliphtaischen Amin sowie einem niedermolekularen Alkylalkohol durchzuführen (vgl. US-PS 3 661 848). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Die bisher erhaltenen Polyphenylenäther weisen den Nachteil auf, daß sie chemisch schwer modifizierbar sind.

Der Erfindung lag somit die Aufgabe zugrunde, durch Abändern der Monomeren Polyphenylenäther zu erhalten, die chemisch leicht modifizierbar sind.

Fre/BL

Diese Aufgabe wurde dadurch gelöst, daß mindestens 3 Gew.-%, bezogen auf die Monomere, eines alkylsubstituierten Phenols verwendet wird, das in 2- oder 6-Stellung eine pfropf- bzw. oxidationsfähige Isopropylgruppe trägt. Bevorzugt ist die Verwendung eines 2-Isopropyl-6-methylphenols.

Nach bevorzugter Verfahrensweise wird auf den Isopropylgruppen enthaltenden Polyphenylenäther eine äthylenisch ungesättigtes Monomer, besonders bevorzugt Styrol oder Methacrylsäuremethylester, pfropfpolymersiert. Bevorzugt ist auch eine Verfahrensweise, bei der die Isopropylgruppe des Polyphenylenäthers durch Oxidation in eine Hydroperoxidgruppe überführt wird.

Unter hochmolekularen Polyphenyläthern werden die durch oxidative Kupplung von 2,6-Dialkylphenol zu einer Kette alkylsubstituierter, in para-Stellung durch Sauerstoffatome ätherartig gebundene Benzolringe verstanden. Die Polymeren weisen Molekulargewichte von 5 000 bis 30 000, bevorzugt 10 000 bis 25 000, bestimmt nach "Macromolecular Syntheses" 1 (1978), Seite 83, auf. Hochmolekulare Polyphenylenäther, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der bekannten hochmolekularen Polyphenylenäther verwendeten einwertigen Phenole, die in den beiden ortho-Stellungen, nicht aber in der para-Stellung Alkylsubstituenten aufweisen, sind übliche Phenole wie 2,6-Dimethylphenol, 2,6-Diäthylphenol, 2-Methyl-6-äthyl-phenyl, 2-Methyl-6-propylphenol, 2,6-Dibutylphenol oder 2,3,6,-Trimethylphenol.

Zur Ausführung der Polykondensation wird üblicherweise Sauerstoffgas in die 25 bis 50, vorzugsweise 30 bis 35°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 875 und 3 306 876 beschrieben sind.

Bei dem für die Polykondensation bekannten Katalysatorkomplex handelt es sich um eine Kombination aus einem Amin, z.B. n-Dibutylamin, Diäthylamin, Picolin, Chinolin, Pyridinbasen, Triisopropylamin, Demethylisopropanolamin, Triäthanolamin, Triisopropanolamin oder Diisopropanolamin mit einem Kupfersalz wie Kupfer-I-Bromid, Kupfer-I-Chlorid, Kupfer-I-iodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalt weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen am Lösungsmittel, bezogen auf das Monomere. Geeignete Lösungsmittel sind Kohlenwasserstoffe, insbesondere Cyclohexan, n-Oktan, n-Dekan oder deren Gemische, wobei vorzugsweise Alkylbenzol oder Cyclohexan verwendet werden. Die verwendeten Lösungsmittel sind für die Monomeren gute Lösungsmittel. Die Lösungsmittel werden bevorzugst im Bereich von 1:1 bis 10:1 Gewichtsteilen, bezogen auf das monomere Phenol, eingesetzt.

Darüberhinaus kann die Reaktionsmischung einen Aktivator wie ein Diarylguanidin oder ein Diarylformamidin enthalten (vgl. US-PS 3 544 515).

Nach bekannter Verfahrenweise erhält man in einem Arbeitsgang ein Fällungspolymerisat, das leicht abfiltrierbar und katalysatorfrei ist. Bei dieser Polymerisationstechnik wird außerdem das Polymere in Ausbeuten von größer als 90 Gew.-%, bezogen auf das eingesetzte Monomer, erhalten.

Nach erfindungsgemäßem Verfahren wird zur Herstellung der hochmolekularen Polyphenylenäther von Phenolmischungen ausgegangen, die neben den eingangs aufgezählten Phenolen mindestens 3, bevorzugt 5 bis 15 Gew.-%, bezogen auf die Monomere, eines alkylsubstituierten Phenols, das in 2- oder 6-Stellung eine pfropffähige Isopropylgruppe trägt, enthalten. Bevorzugtes Phenol ist dabei das 2-Isopropyl-6-methylphenol. Nach bevorzugter Verfahrensweise wird das eine Isopropylgruppe enthaltende Phenol als Zulauf in die Reaktionslösung eindosiert, aber auch das Vorlegen des Monomeren und Eindosieren des Katalysators ist eine gängige Verfahrensvariante.

Zur Pfropfung eines äthylenisch ungesättigten Monomers, bevorzugt des Styrols oder Methacrylsäuremethylesters, auf den Isopropylgruppen enthaltenden Polyphenylenäther werden die Monomeren mit dem erfindungsgemäß modifizierten Polyphenylenäther gemischt vorzugsweise im Verhältnis 100:1 bis 2:1 und dann bei Temperaturen größer als 150$^\circ$C im Verlauf von 3 bis 5 Stunden polymerisiert. Gegebenenfalls kann auch in Gegenwart von Wasser und Emulgierhilfsmittel wie Oleaten oder Arylsulfonaten gearbeitet werden. Die Pfropfung kann auch entsprechend der DE-PS 12 91 609 durchgeführt werden.

Die Isopropylgruppe des Polyphenyläthers kann nach üblichen Methoden durch Oxidation in eine Hydroperoxidgruppe überführt werden. Hierzu wird die Verbindung vorzugsweise in einem Sauerstoffstrom bei Temperaturen über 150°C, vorzugsweise bei 170 bis 210°C, behandelt. Die Reaktion wird vorzugsweise in einem Wirbelbett durchgeführt, gegebenenfalls können auch hochsiedende Lösungsmittel wie Diphenyläther oder Chlorbenzol verwendet werden. Das erhaltene Hydroperoxid enthaltende Polyphenylen kann für die radikalische Polymerisationen verwendet werden. Hierzu werden 100 Teile Styrol mit 5 Teilen des erfindungsgemäßen Hydroperoxides versetzt und 3 Stunden bei 150°C zur Reaktion gebracht. Nach einer Nachreaktionszeit von 1 Stunde bei 220°C sind 99 Gew.-% des Styroles polymerisiert und das verwendete Hydroperoxid analytisch nicht mehr nachweisbar.

Die Erfindung wird durch die nachfolgenden Beispiele näher erläutert.

## Beispiel 1

Herstellung von Poly[(2-isopropyl-6-methyl)-(2,6-dimethyl)-1,4-phenylen)]äther.

Zu einer Vorlage von 1,3 g Cu-I-Bromid und 33 g Dibutylamin werden 2 g 2,6-Dimethylphenol gegeben und bei 30°C 5 Minuten unter Einleiten von Sauerstoff gerührt. Eswird im Verlauf von 30 Minuten eine Lösung von 24 g 2-Isopropyl-6-methylphenol und 180 g 2,6-Dimethylphenol in 1 400 ml Cyclohexan eindosiert, anschließend wird noch 1 Stunde bei 33°C gerührt. Die Reaktion wird in Gegenwart von 30 Liter/Stunde Sauerstoff durchgeführt.

Nach Beendigung der Reaktion wird das ausgefallene Polymerisat abfiltriert und 2 mal mit 100 ml Methanol gewaschen. Das erhaltene Polymerisat hat nach den Trocknen

eine Intrinsic Viskosität $[\eta]$ von 0,3 dl/g. Die Ausbeute an Polymeren lag bei über 90 Gew.-% (bezog.. auf das eingesetzte Monomere). Analyse: Cu-Gehalt: 4 :. m und N-Gehalt: 0,1 Gew.-%. 100 Teile dieses Pol: eren werden mit 100 Teilen Styrol versetzt und in einem Extruder bei 250°C extrudiert und polymerisiert. Es wird ein Phenolpolymerisat erhalten aus dem durch Umfällung aus Toluol und säulen-romatographische Auftrennung weniger als 3 Gew.-% des vphenylenäthers ungepfropft vorliegen.

Beispiel 2

d wie im Beispiel 1 beschrieben gearbeitet, jedoch Art und Menge der Reaktanten variiert, so werden die in der folgenden Tabelle wiedergegebenen Resultate erhalten.

| Beispiel | Katalysation (g) wasser- frei | Lösungsmittel | Menge (in g) d. Isopropyl- methylphenols/ 2,6-Dimethyl- phenol | dl/g |
|---|---|---|---|---|
| 1 | 1,3 Cu-I-Br | Cyclohexan | 7/197 | 0,38 |
| 2 | 1,3 Cu-I-Br | Toluol | 10/194 | 0,52 |
| 3 | 1,3 Cu-I-Br | Ethylbenzol | 20/184 | 0,6 |
| 4 | 1,3 Cu-I-Br | Xylol | 30/174 | 0,55 |
| 5 | 1,3 Cu-I-Br | Ethylbenzol | 40/164 | 0,62 |
| 6 | 1,2 Cu-I-Br | Ethylbenzol | 50/154 | 0,6 |
| 7 | 1,1 Cu-I-Br | Ethylbenzol | 60/144 | 0,6 |
| 8 | 1,1 Cu-I-Br | Ethylbenzol | 70/134 | 0,61 |
| 9 | 0,9 Cu-I-Br | Ethylbenzol | 24/180 | 0,55 |
| 10 | 0,8 Cu-I-Br | Ethylbenzol | 34/170 | 0,52 |

**Patentansprüche**

1.  Verfahren zur Herstellung hochmolekularer Polyphenylenäther aus einwertigen Phenolen, der in den beiden
    ortho-Stellungen, nicht aber in der para-Stellung,
    Äthylsubstituenten aufweisen, durch oxidative Kupplungsreaktion mit Sauerstoff bei Temperaturen zwischen
    25 und 50°C in Anwesenheit eines Katalysatorkomplexes
    aus einem Kupfersalz und einem organischen Amin in
    Gegenwart eines Lösungsmittels im Bereich von 1:1 bis
    20:1 Gewichtsteilen, bezogen auf das monomere Phenol,
    und gegebenenfalls eines Aktivators, dadurch gekennzeichnet, daß mindestens 3 Gewichtsprozent, bezogen
    auf die Monomere, eines alkylsubstituierten Phenols
    verwendet wird, das in 2- oder 6-Stellung eine pfropf-
    bzw. oxidationsfähige Isopropylgruppe trägt.

2.  Verfahren nach Anspruch 1, dadurch gekennzeichnet, daß
    als alkylsubstitiertes Phenol 2-Isopropyl-6-methylphenol
    verwendet wird.

3.  Verfahren nach Anspruch 1, dadurch gekennzeichnet, daß
    auf den Isopropylgruppen enthaltenden Polyphenylenäther
    ein äthylenisch ungesättigtes Monomer pfropfpolymerisiert
    wird.

4.  Verfahren nach Anspruch 1 und 3, dadurch gekennzeichnet,
    daß das äthylenisch ungesättigte Monomer Styrol oder
    Methacrylsäuremethylester ist.

5.  Verfahren nach Anspruch 1, dadurch gekennzeichnet, daß
    die Isopropylgruppe des Polyphenylenäthers durch Oxidation
    in eine Hydroperoxidgruppe überführt wird.

6. Verwendung des Hydroperoxid enthaltenden Polyphenylenäthers nach Anspruch 5 für radikalische Polymerisationen.

0054140

**Europäisches Patentamt**

# EUROPÄISCHER RECHERCHENBERICHT

Nummer der Anmeldung

EP 81 10 8699.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>GB - A - 2 020 296</u> (GENERAL ELECTRIC CO.) * Ansprüche 1, 3, 4, 7, 8 * -- | 1,3,4 |
| A | Chemical Abstract Band 80, Nr. 6, 11. Februar 1974 Columbus, Ohio, USA J. BIALY et al. "Plastics composition containing polyoxyphenylene" Seite 37, Abstract Nr. 27941w & PL - B - 67 867 -- | 1 |
| A | <u>DE - A - 1 962 677</u> (GENERAL ELECTRIC CO.) * Ansprüche 1, 4 * -- | 1 |
| A | <u>DE - B - 1 145 360</u> (GENERAL ELECTRIC CO.) * Ansprüche 1, 6; Beispiel 7 * -- | 1 |
| P,A | <u>EP - A1 - 0 025 200</u> (KANEGAFUCHI KAGA-KU KOGYO K.K.) * gesamtes Dokument * ---- | |

### KLASSIFIKATION DER ANMELDUNG (Int. Cl.³)

C 08 G 65/44

C 08 G 65/48

C 08 F 283/08

C 08 F 4/36

### RECHERCHIERTE SACHGEBIETE (Int. Cl.³)

C 08 F 4/36

C 08 F 283/00

C 08 G 65/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 26-02-1982 | HASS |

EPA form 1503.1   06.78